Europäisches Patentamt

European Patent Office

Office européen des brevets

(19)

(11) Numéro de publication : **0 476 027 B1**

(12) # FASCICULE DE BREVET EUROPEEN

(45) Date de publication du fascicule du brevet :
18.08.93 Bulletin 93/33

(51) Int. Cl.⁵ : **C10G 9/20**

(21) Numéro de dépôt : **90909464.1**

(22) Date de dépôt : **05.06.90**

(86) Numéro de dépôt international :
**PCT/FR90/00392**

(87) Numéro de publication internationale :
**WO 90/15119 13.12.90 Gazette 90/28**

(54) **UTILISATION D'ALLIAGES A BASE DE NICKEL DANS UN PROCEDE DE CRAQUAGE THERMIQUE D'UNE CHARGE PETROLIERE ET REACTEUR POUR LA MISE EN UVRE DU PROCEDE.**

(30) Priorité : **08.06.89 FR 8907705**

(43) Date de publication de la demande :
**25.03.92 Bulletin 92/13**

(45) Mention de la délivrance du brevet :
**18.08.93 Bulletin 93/33**

(84) Etats contractants désignés :
**AT BE DE ES FR GB IT NL SE**

(56) Documents cités :
**EP-A- 0 269 973**
**BE-A- 0 802 408**
**DE-A- 1 957 823**
**FR-A- 2 530 653**

(73) Titulaire : **INSTITUT FRANCAIS DU PETROLE**
**4, Avenue de Bois Préau**
**F-92506 Rueil-Malmaison Cédex (FR)**

(72) Inventeur : **BROUTIN, Paul**
**28, allée Simon-Saint-Jean**
**F-69130 Ecully (FR)**
Inventeur : **BUSSON, Christian**
**47, Avenue Bergeron**
**F-69260 Charbonnière (FR)**
Inventeur : **MONTOYA, Antoine**
**Lotissement les Pierres Folles**
**F-69280 Marcy-l'Etoile (FR)**
Inventeur : **WEILL, Jérome**
**16, route des Tourelles**
**F-69005 Lyon (FR)**

(74) Mandataire : **Andreeff, François**
**INSTITUT FRANCAIS DU PETROLE 4, avenue**
**de Bois-Préau**
**F-92506 Rueil-Malmaison Cédex (FR)**

## Description

L'invention concerne un procédé de craquage thermique d'une charge comprenant au moins un hydrocarbure contenant au moins un atome de carbone, dans une zone de craquage ou de pyrolyse constituée d'un nouvel alliage.

Par craquage thermique, on entend les procédés de vapocraquage d'une charge d'au moins un hydrocarbure à deux atomes de carbone en présence de vapeur d'eau, les procédés de déshydrogénation thermique telle la pyrolyse du méthane ou de déshydrogénation catalytique telle la déshydrogénation de l'éthylbenzène en styrène ou du propane en propylène.

Tous ces procédés impliquent des réactions à haut flux thermique, suivies d'une trempe rapide des effluents de pyrolyse.

Dans la suite de la description, on décrira à titre purement illustratif, l'invention comme étant un procédé de vapocraquage d'au moins un hydrocarbure renfermant au moins deux atomes de carbone, destiné à produire des oléfines légères.

Son principe est basé sur l'instabilité à température elevée des paraffines et des naphtènes comparativement à celle des oléfines et des aromatiques. Les réactions principales sont la rupture d'une liaison C-C par un mécanisme de rupture homolytique pour conduire à une oléfine et à une paraffine, et la déshydrogénation. Ces deux réactions sont endothermiques, et donc favorisées par une élévation de la température ; elles provoquent, par ailleurs, une augmentation du nombre de molécules, ce qui fait qu'elles sont favorisées par de faibles pressions partielles des hydrocarbures à traiter ; c'est la raison pour laquelle cette pression est réduite au maximum par addition de vapeur d'eau au milieu réactionnel.

Les problèmes liés à l'utilisation de la technique de vapocraquage font apparaître plusieurs sources principales de difficultés inhérentes au procédé opérant à haute température :
- oxydation des matériaux constitutifs du réacteur,
- cémentation de ces matériaux,
- formation de coke sur les parois en contact avec les hydrocarbures,
- tenue au fluage du réacteur.

Une des solutions proposée par la demanderesse WO 8700546 a été l'utilisation de matériaux céramiques permettant de tenir à très haute température (par exemple 1200 °C) et d'obtenir un flux thermique élevé.

L'accroissement de ce dernier facteur peut être essentiellement obtenu en augmentant la température de peau des réacteurs tubulaires et/ou en diminuant le diamètre des tubes (ce qui permet d'augmenter le rapport s/v, s étant la surface d'échange et v le volume réactionnel).

Cependant, il existe un certain nombre de difficultés de mise en oeuvre, en particulier au niveau de l'étanchéité au contact de la céramique formant le réacteur et des tubulures métalliques d'alimentation et de sortie des divers fluides utilisés dans le procédé.

Les progrès réalisés en métallurgie sur des alliages spéciaux résistant à des températures de plus en plus élevées (INCOLOY 8OOH, HK 40, HP40, par exemple) ont permis aux constructeurs de fours de pyrolyse pour vapocraquage d'augmenter les températures de fonctionnement de ces fours tubulaires, les limites actuelles de la métallurgie étant situées vers 1100 °C.

Il est connu, par ailleurs, pour pouvoir obtenir une meilleure tenue en température des alliages métalliques à base de nickel, d'augmenter fortement leur teneur en nickel. Par contre, il est aussi connu de l'homme du métier que le nickel et le fer catalysent la réaction de formation du coke sur les parois du réacteur en contact avec la charge.

De plus, pour réaliser une réaction de vapocraquage, l'homme du métier doit tenir compte du fait que la paroi externe de la zone réactionnelle en contact avec le fluide de chauffage à haute température, est exposée à une atmosphère oxydante alors que sa paroi interne en contact avec la charge est exposée à une atmosphère globalement réductrice. Il est donc impératif que le matériau choisi ait un bon comportement en température dans ces deux milieux extrêmes.

Le brevet US 4671931 décrit un alliage à forte teneur en nickel résistant à l'oxydation à haute température. Cependant, il n'est pas fait allusion dans ce brevet à l'utilisation de cet alliage dans les conditions sévères dues à l'exposition simultanée d'une part à une atmosphère oxydante, et d'autre part à une atmosphère réductrice d'hydrocarbures telles que celles rencontrées dans les procédés de craquage thermique. Il n'est notamment pas soulevé le problème de l'utilisation d'alliages métalliques affectes par la cémentation, ni celui lié à la vitesse de formation du coke.

La présente invention permet de rémédier aux inconvénients ci-avant et de répondre aux problèmes techniques ci-avant.

Un des objets de celle-ci est de pouvoir opérer avec une technologie entièrement métallique à des températures maximales de peau (de la paroi au contact avec les fumées de chauffage) pouvant atteindre 1190 °C à 1250 °C sans risque sensible pour le matériau.

On a donc découvert un procédé qui dans le cas du vapocraquage permet d'accroître la sélectivité en oléfines, celle-ci augmentant avec la température moyenne au sein du réacteur.

Dans sa conception la plus large, l'invention concerne un procédé de craquage thermique d'une charge contenant au moins un hydrocarbure à un atome de carbone au moins, dans lequel on fait circuler cette charge, dans des conditions de craquage thermique, dans une zone réactionnelle métallique dont la paroi externe est en relation d'échange thermique avec un fluide de chauffage et à la sortie de laquelle on récupère des effluents de craquage. De manière plus précise, cette zone réactionnelle, habituellement de forme allongée et le plus souvent tubulaire, est constituée essentiellement d'un alliage comprenant en poids :

- 66 à 82 % de nickel,

- 14 à 18 % de chrome, et

- 4 à 6 % d'aluminium.

La composition de cet alliage permet de résister suffisamment à l'oxydation et au fluage au niveau de températures ci-dessus et d'obtenir une réfractérité satisfaisante. Dans ces conditions, la durée de vie du réacteur est augmentée et on constate également une sensibilité moindre à la fatigue due aux cyles thermiques successifs.

A la sortie de cette zone réactionnelle, on peut éventuellement effectuer une trempe indirecte ou directe des effluents de craquage.

La composition pondérale de l'alliage peut être, de manière avantageuse, la suivante

- 66 à 81,999 % et de préférence 71 à 78,9 % de nickel,

- 14 à 18 % et de préférence 15 à 17 % de chrome,

- 4 à 6 % et de préférence 4,1 à 5,1 % d'aluminium, et

- 0,001 à 8 % et de préférence 1 à 6 % de fer.

La mise en oeuvre d'alliage de ce type, contenant du fer, et en particulier de ceux contenant de 1 à 6 % en poids de fer, est habituellement plus facile.

Selon une autre caractéristique du procédé, selon l'invention, la zone réactionnelle comprend généralement une paroi interne en contact avec le mélange qui peut être préoxydée par mise en contact, à une température de 1050 °C à 1250 °C pendant 1 à 120 minutes, avec un mélange de gaz comprenant de l'hydrogène et de l'oxygène, ledit mélange ayant un point de rosée inférieur à - 34 °C. Il est également possible et souvent préférable de préoxyder les parois internes et externes de la zone réactionnelle.

Cette passivation par formation d'une couche protectrice d'alumine permet d'augmenter la résistance à l'oxydation et à la cémentation. En effet, on a remarqué de manière surprenante, bien que la teneur en chrome soit inférieure à 20 %, que l'on formait sélectivement de l'oxyde d'aluminium et, par contre, de faibles quantités d'oxyde de chrome et de nickel. La passivation, ainsi réalisée a également un effet inhibiteur sur le dépôt de coke, l'hydrocarbure n'étant plus en contact direct avec le nickel qui catalyse les réactions de formation de celui-ci.

On a pu ainsi constater de façon surprenante que la vitesse de cokage avec cet alliage était habituellement quatre à cinq fois inférieure à celle observée dans le cas d'alliages traditionnels comme l'Incoloy 800 H et comparable à celle observée dans le cas du carbure de silicium.

Selon une autre caractéristique, l'alliage peut contenir, en outre :

- de 0 à 0,25 % de carbone,
- de 0 à 0,03 % de bore
- de 0 à 5 % de tungstène,
- de 0 à 2,5 % de tantale,
- de 0 à 5 % de titane,
- de 0 à 0,5 % de hafnium,
- de 0 à 0,25 % de zirconium,
- de 0 à 0,2 % de rhénium,
- de 0 à 12 % de cobalt,
- de 0 à 1 % de manganèse,
- de 0 à 3 % de molybdène,
- de 0 à 1 % de silicium,
- de 0 à 1,5 % d'yttrium.
- de 0 à 0,2 % de cadmium,
- de 0 à 0,05 % de soufre, et
- de 0 à 0,05 % de phosphore.

Avec ou sans la présence de ces métaux auxilliaires, la température maximale de paroi externe de la zone réactionnelle en contact avec le fluide de chauffage peut atteindre 1190 à 1250 °C sans risque sensible pour le matériau.

A titres d'exemples non limitatifs d'alliages utilisables dans le cadre de la présente invention, on peut citer :
- l'alliage vendu par la société HAYNES sous la référence ALLOY 214, et
- l'alliage vendu par la société INCO-ALLOYS sous la référence ALLOY MA 6000.

Les parois de la zone réactionnelle, préalablement préoxydées (et en particulier les parois internes de cette zone en contact avec la charge d'hydrocarbures) peuvent, dans une forme particulière de réalisation de l'invention, être revêtues d'au moins une couche formée par un oxyde d'au moins un métal et/ou au moins un carbure métallique et/ou au moins un nitrure métallique et/ou au moins un siliciure d'un métal.

Dans la pratique de la présente invention, on peut utiliser une ou plusieurs matières de revêtement appartenant au groupe des matières mentionnées ci-avant pour revêtir les surfaces de l'appareil et en particulier celles qui sont en contact avec la charge d'hydrocarbures à transformer.

Parmi les matières utilisables pour revêtir les parois de la zone réactionnelle, on peut citer comme exemples typiques de ces composés, pour ce qui est de la catégorie des oxydes métalliques, l'alumine ($Al_2O_3$), la zircone ($ZrO_2$), la zircone stabilisée par l'oxyde d'yttrium ($ZrO_2 + Y_2O_3$), un mélange d'oxyde de cérium et d'oxyde d'yttrium, ($CeO_2 + Y_2O_3$), la silice ($SiO_2$) et l'oxyde de titane. Dans le cas des carbures, on peut citer comme exemples typiques le carbure de silicium (SiC), le carbure de titane (TiC), le carbure de zirconium (ZrC) et le carbure de bore ($B_4C$). Parmi les nitrures, on peut citer à titre d'exemples non limitatifs le nitrure de bore (BN), le nitrure de titane (TiN) et le nitrure de zirconium (ZrN). Enfin, parmi les siliciures, on peut citer ceux de titane, de zirconium et de niobium.

Il n'y a pas de limitation particulière au procédé selon lequel on revêt les surfaces de l'appareil. A titre d'exemples de procédés particuliers que l'on peut utiliser pour revêtir les parois de la zone réactionnelle, on peut citer les procédés classiques suivants :
- imprégnation par un mélange habituellement dénommé barbotine contenant les éléments choisis pour former le revêtement et au moins un liant,
- dépôt par voie chimique en phase vapeur (technique dénommée en abrégée CVD pour chemical vapor déposition en terminologie anglo-saxonne), par exemple à partir de chlorures, de fluorures, de bromures, d'iodures, de composés organométalliques, d'hydrures ou de composés carbonylés avec un réducteur tel que par exemple de l'hydrogène,
- dépôt assisté par plasma par voie chimique en phase vapeur (technique dénommée en abrégée PACVD pour plasma assisted chemical vapor déposition en terminologie anglo-saxonne) où une décharge électrique est maintenue dans la phase gazeuse,

4

- dépôt par pulvérisation, par exemple par pulvérisation à la flamme (pulvérisation thermique) ou par pulvérisation par plasma qui consiste en l'injection d'une poudre dans un jet de plasma à très haute température. Ce procédé peut être conduit dans l'air, notamment dans le cas des oxydes, ou sous atmosphère inerte, par exemple sous azote, argon ou sous hélium, notamment dans le cas des carbures métalliques. Le dépôt peut être réalisé à la pression atmosphérique ou sous pression inférieure à la pression atmosphérique.

La pulvérisation à froid peut être utilisée pour projeter des poudres et est habituellement suivie d'un traitement thermique destiné à densifier et à diminuer la porosité des revêtements formés.

La couche de revêtement a le plus souvent une épaisseur au moins égale à environ $2x10^6$ m et de préférence au moins égale à environ $5x10^{-6}$ m (mètre). Cette couche a habituellement une épaisseur d'environ $2x10^{-6}$ à environ $10^{-3}$ m et de préférence d'environ $5x10^{-6}$ à environ $5x10^{-4}$ m.

La couche de revêtement peut éventuellement comporter un catalyseur, par exemple il est possible de déposer, par toutes méthodes bien connues de l'homme du métier, sur la couche de revêtement, un catalyseur tel que par exemple un catalyseur classique de déshydrogénation lorsque l'on veut effectuer ce type de réaction. Ceci est également possible dans le cas de la réalisation de toutes réactions thermo-catalytiques et en particulier de craquage et/ou de vapocraquage. Il est également possible de déposer d'abord un support de catalyseur sur le revêtement, puis ensuite la ou les phases catalytiquement actives.

Selon un mode avantageux de réalisation, la zone réactionnelle de pyrolyse peut être une structure dite nid d'abeilles et peut comprendre une pluralité de canaux juxtaposés sensiblement parallèles entre eux formant deux groupes, chaque canal du premier groupe étant en relation d'échange thermique avec au moins un canal du second groupe, les canaux du premier groupe s'étendant sur toute la longueur de la zone réactionnelle et étant parcourus par le mélange réactionnel, les canaux du second groupe étant alimentés par le fluide de chauffage et s'étendant au moins en partie le long de la zone réactionnelle. L'alimentation en fluide de chauffage de cette zone chauffage étant réalisée à une extrémité de la zone réactionnelle, la circulation du fluide de chauffage peut s'effectuer, selon le type de charge à craquer, à co-courant ou à contre-courant des gaz constitués par le mélange réactionnel ou les effluents (gaz process) ; l'association de ces types de circulation peut être également envisagée. De préférence, dans ce mode de réalisation, la circulation s'effectue à co-courant.

Selon un autre mode de réalisation particulièrement avantageux par sa mise en oeuvre, l'alimentation en fluide de chauffage peut être réalisée perpendiculairement aux canaux par au moins une ouverture percée latéralement à ceux-ci et le fluide s'écoule alors axialement, en partie à co-courant et en partie à contre-courant du gaz process. De préférence, cette alimentation est située en un point intermédiaire dont la distance au début de la zone réactionnelle (côté d'introduction du mélange) représente 5 à 95 % et avantageusement 20 à 40 % de la longueur de cette zone. Selon ce même mode de réalisation, le soutirage du fluide de chauffage s'effectue aussi perpendiculairement à l'axe des canaux au niveau d'une ou de deux sorties situées aux extrêmités de la zone de chauffage.

De cette façon, l'apport maximum de chaleur peut être transmis aux canaux parcourus par le mélange à craquer à l'endroit où se produisent les réactions endothermiques de craquage et de déshydrogénation. Il est particulièrement avantageux que 5 à 80 %, de préférence 20 à 50 % du fluide de chauffage soit soutiré en tête et le complément à 100 % soit soutiré en queue.

Le nombre total de rangées de canaux n'est pas déterminant dans le procédé, il est fonction de la dimension de l'ensemble du réacteur et des dimensions d'un canal unitaire. La section de ce canal unitaire peut être avantageusement comprise entre 9 et 900 mm² et de préférence entre 25 et 100 mm². Le canal peut avoir une forme sensiblement carrée ou rectangulaire ou polygonale et sa longueur peut être comprise par exemple entre 0,5 et 10 m.

Les avantages que présentent ces modes de réalisation selon l'invention par rapport aux procédés connus de craquage sont nombreux :
- obtention d'une température de paroi dans la zone de pyrolyse pratiquement homogène,
- possibilité de fonctionner à des températures de parois atteignant 1190 à 1250 °C, et permettant d'augmenter la densité de flux thermique et la température de mise en oeuvre de la réaction ; ceci est particulièrement important dans le cas du craquage de l'éthane,
- augmentation du rapport s/v, s étant la surface d'échange et v le volume réactionnel ; c'est ainsi que dans la technique dite "milliseconde" ce rapport est de l'ordre de 120 m⁻¹, alors que la technique de l'invention permet d'atteindre des valeurs au moins égales à 200 m⁻¹ et pouvant atteindre des valeurs de 1000 m⁻¹,
- faible perte de charge à l'intérieur de la zone réactionnelle ne dépassant pas 0,5 bar,
- apport de chaleur maximum au niveau de la zone réactionnelle où se produisent les réactions fortement endothermiques, conduisant à un très faible gradient de température sur l'intégralité de la zone réactionnelle.

L'invention concerne aussi le réacteur comprenant une zone réactionnelle métallique ayant une paroi externe en relation d'échange thermique avec une source d'énergie adaptée à pyrolyser une matière contenant des hydrocarbures, cette source d'énergie étant par exemple, un fluide gazeux de chauffage. La zone réactionnelle est constituée d'un alliage comprenant généralement en poids :

- 66 à 82 % de nickel,
- 14 à 18 % de chrome, et
- 4 à 6 % d'aluminium.

Par l'utilisation de cet alliage, on a observé que la durée de vie d'un réacteur était substantiellement augmentée malgré des expositions des faces internes et externes de la zone réactionnelle à des atmosphères respectivement réductrices et oxydantes à très haute température. Dans le cas d'une utilisation en vapocraquage, on a constaté également une fréquence de décokage moins importante.

Ce réacteur, ou au moins la zone réactionnelle, peut également être réalisé à l'aide d'un alliage, préalablement préoxydé, revêtu d'au moins une couche formée par un oxyde d'au moins un métal et/ou au moins un carbure métallique et/ou au moins un nitrure métallique et/ou au moins un siliciure d'un métal.

On peut également envisager de fabriquer le réacteur à l'aide de l'alliage à base de nickel, puis d'effectuer la préoxydation et ensuite de déposer, par toutes méthodes bien connues de l'homme du métier, un revêtement choisi parmi ceux mentionnés ci-avant.

La fabrication d'un réacteur, de type nid d'abeilles, en matériau métallique peut être effectuée de diverses manières bien connues de l'homme de métier. A titre d'exemples non limitatifs, on décrira ci-après deux modes particuliers de fabrication dont la mise en oeuvre est relativement aisée.

Dans la mesure où le matériau métallique ne peut être extrudé, le réacteur type nid d'abeilles peut être préparé selon un premier mode de fabrication de la façon suivante :

- on étire des tubes généralement ronds et l'on obtient des tubes sensiblement carrés de maille par exemple comprise entre 4 et 10 mm et d'épaisseur de cloison comprise entre 0,5 et 1 mm.
- on assemble ces tubes, sensiblement carrés, après rectification et mise à la longueur souhaitée, par brasage.
- on finit l'ensemble du réacteur, une fois assemblé, de section carrée de la façon suivante :
  . on perce, par exemple par électroérosion ou par découpe au laser, des fentes sur les tubes de rangs impairs par exemple adaptés à recevoir le fluide de chauffage dans les conditions du procédé selon l'invention;
  . lors d'une deuxième passe de brasage, on bouche, à leurs extrémités, les canaux recevant le fluide de chauffage à l'aide de plaques du matériau choisi, ayant pour dimension la maille du tube ;
- on peut éventuellement braser sur le faisceau de tubes obtenus, une enveloppe extérieure de même matériau et d'épaisseur 2 à 5 mm, lors d'une troisième passe de brasage.

L'ordre des trois passes est indifférent, ainsi que celui du perçage des fentes qui peut être réalisé avant toute opération de brasure.

Le réacteur type nid d'abeilles peut également être réalisé selon un deuxième mode de fabrication de la façon suivante :

- Des demi-canaux de forme sensiblement carrée sont réalisés par usinage de plaques métalliques qui sont ensuite empilées et brasées.
- Les fentes d'entrée et de sortie du fluide chauffant ainsi que les bouchages aux extrémités des canaux de passage de ce fluide sont réalisées par un usinage et un assemblage adéquat. Un tel assemblage sera décrit ultérieurement en détail.

On peut ensuite raccorder un échangeur de trempe conventionnel comme celui décrit dans le brevet US 3910347 au réacteur de pyrolyse par des moyens connus tels qu'une bride métallique.

On peut selon un autre mode de fabrication réaliser la partie réacteur de trempe de la même manière que celle décrite ci-avant, les canaux de rangs impairs bouchés aux extrémités et percés latéralement au voisinage de ces extrémités étant adaptés à faire s'écouler un fluide de trempe. On brase les deux réacteurs de pyrolyse et de trempe. Enfin, on relie une extrémité des canaux de rangs pairs à un distributeur de charge et l'autre extrémité à un collecteur d'effluents puis on relie les fentes des canaux de rangs impairs à un distributeur de fluides de chauffage, côté pyrolyse, et à un distributeur de fluides de refroidissement, côté trempe et les fentes des faces opposées à un collecteur de fluide de chauffage, côté pyrolyse et à un collecteur du fluide de refroidissement, côté trempe.

L'exemple suivant illustre l'invention :

Des essais de vapocraquage de naphta ont été réalisés en présence de vapeur d'eau à une température figurant dans le tableau 1 ci-après sur une installation pilote équipée successivement de cinq tubes de même dimension mais faits de matériaux différents, chauffés par des fumées de combustion. Sur l'installation pilote, la trempe est effectuée à 500 °C de façon indirecte dans un échangeur type TLX en ligne.

Le tube A est réalisé en Incoloy 800 H (contenant en poids 20 % de Chrome et 32 % de Nickel) alliage communément utilisé en vapocraquage;

Le tube B est réalisé dans l'alliage de composition suivante en % poids :

| | | | | | | | |
|---|---|---|---|---|---|---|---|
| - | Ni | 74,653 | % | - | Cr | 16,34 | % |
| - | Al | 4,54 | % | - | Fe | 3,68 | % |
| - | Mn | 0,2 | % | - | Mo | 0,1 | % |
| - | W | 0,1 | % | - | Ti | 0,1 | % |
| - | Si | 0,1 | % | - | Cd | 0,05 | % |
| - | Co | 0,05 | % | - | C | 0,04 | % |
| - | Zr | 0,03 | % | - | P | 0,005 | % |
| - | Y | 0,004 | % | - | B | 0,004 | % |
| - | S | 0,002 | % | - | Mg | 0,002 | % |

Le prétraitement est réalisé par mise en contact du tube pendant 60 minutes à une température de 1095 °C sous hydrogène avec une teneur résiduaire en air telle que le point de rosée soit égal à - 50 °C.

Les tubes C et D sont obtenus à partir de tubes B, prétraités comme décrit ci-avant, suivant le mode opératoire décrit ci-après.

Dans le cas du tube C, on réalise un dépôt d'alumine par imprégnation au moyen d'une barbotine. Cette suspension, dite barbotine, est constituée par 75 % en poids d'alumine (de surface spécifique égale à 2 $m^2xg^{-1}$), 25 % en poids de bohémite servant de liant et une teneur en eau, exprimée par rapport au poids de solide, de 30 % en poids. Cette suspension est soumise à une opération de broyage dans des conditions permettant d'obtenir un produit qui filtre totalement à travers un tamis ayant des ouvertures de $10^{-5}$ m. Le tube est plongé dans la barbotine broyée et maintenu en contact pendant 2 minutes. On retire ensuite le tube et on laisse l'excès de barbotine s'écouler à température ambiante pendant 5 minutes. Le tube est ensuite soumis à un traitement thermique au cours duquel on porte sa température à 1050 °C et on le maintient à cette température pendant 5 heures. Après refroidissement jusqu'à la température ambiante, on constate que la couche d'alumine ainsi obtenue a une épaisseur de $5x10^{-5}$ mètre.

Dans le cas du tube D, on réalise un dépôt de carbure de titane par dépôt chimique en phase vapeur (CVD). Ce dépôt est réalisé, de manière classique, par la réduction par l'hydrogène de tétrachlorure de titane, en présence de méthane, en maintenant le tube à revêtir à une température de 1000 °C. On réalise ainsi un revêtement de $10^{-5}$ m d'épaisseur.

Le tableau suivant compare les rendements obtenus sur même naphta pour la température de peau maximale compatible avec les matériaux utilisés et donne également les caractéristiques de la charge craquée.

Dans le cas du tube B prétraité ou non, on notera, outre l'augmentation de la sélectivité en oléfines (gain de presque 5 points de rendement sur le total C2 + C3) liée à l'accroissement de la température moyenne réactionnelle, la plus faible vitesse de dépôt de coke observée pour un tube prétraité sous hydrogène dans les conditions décrites ci-avant et ce, malgré une température de peau plus importante. Dans le cas où il n'y a pas prétraitement, la vitesse de cokage est multipliée par un facteur 4 dans les conditions de l'essai. Les autres résultats expérimentaux sont inchangés par rapport au cas où le tube B a été prétraité.

On notera également la plus faible vitesse de dépôt de coke dans le cas des tubes C et D par rapport à celle obtenue avec le tube B prétraité.

## TABLEAU 1

|  | Tube A | Tube B prétraité sous H2 | Tube B non prétraité |
|---|---|---|---|
| **DIMENSIONS (mm)** |  |  |  |
| Section | 8 x 10 | 8 x 10 | 8 x 10 |
| Longueur | 1000 | 1000 | 1000 |
| **MATIERE** | Incoloy 800H | Superalliage à 74,653 % de nickel | Superalliage à 74,653 % de nickel |
| **CONDITIONS OPERATOIRES** |  |  |  |
| **Débits** |  |  |  |
| Débit naphta (kg/h) | 8 | 8 | 8 |
| Débit eau (kg/h) | 4,8 | 4,8 | 4,8 |
| **Températures "naphta"** |  |  |  |
| Entrée (°C) | 600 | 600 | 600 |
| Sortie (°C) | 933 | 985 | 985 |
| **Pression "naphta"** |  |  |  |
| Entrée (MPa absolue) | 0,197 | 0,205 | 0,205 |
| Sortie (MPa absolue) | 0,150 | 0,150 | 0,150 |
| **Temps de séjour (ms)** | 93 | 85 | 85 |
| **CARACTERISTIQUES DU NAPHTA** |  |  |  |
| Densité (15 °C) | 0,681 |  |  |
| **ASTM** |  |  |  |
| Point initial (°C) | 36 |  |  |
| Point final (°C) | 184 |  |  |
| **COMPOSITION (% poids)** |  |  |  |
| % N paraffines | 42,12 |  |  |
| % Isoparaffines | 37,66 |  |  |
| % Naphténiques | 14,44 |  |  |
| % Aromatiques | 5,38 |  |  |
| **RENDEMENTS (% pds)** |  |  |  |
| Fuel gas (CH4 + H2) | 14,2 | 13,5 | 13,5 |
| Coupe C2 | 33,3 | 38,8 | 38,8 |
| Coupe C3 | 17,6 | 16,5 | 16,5 |
| Coupe C4 | 13,9 | 11 | 11 |
| Essence (C5-C11) | 18 | 17 | 17 |
| Fuel oil résiduaire (C12+) | 3,0 | 3,2 | 3,2 |
| Température peau maxi (°C) | 1054 | 1198 | 1198 |
| Vitesse de cokage en ce point (g x h$^{-1}$ x m$^{-2}$) | 63 | 20 | 82 |

## TABLEAU 1 (suite)

|  | Tube A | Tube C | Tube D |
| --- | --- | --- | --- |
| **DIMENSIONS (mm)** |  |  |  |
| Section | 8 x 10 | 8 x 10 | 8 x 10 |
| Longueur | 1000 | 1000 | 1000 |
| **MATIERE** | Incoloy 800H | Superalliage à 74,653 % de nickel | Superalliage à 74,653 % de nickel |
| **CONDITIONS OPERATOIRES** |  |  |  |
| **Débits** |  |  |  |
| Débit naphta (kg/h) | 8 | 8 | 8 |
| Débit eau (kg/h) | 4,8 | 4,8 | 4,8 |
| **Températures "naphta"** |  |  |  |
| Entrée (°C) | 600 | 600 | 600 |
| Sortie (°C) | 933 | 985 | 985 |
| **Pression "naphta"** |  |  |  |
| Entrée (MPa absolue) | 0,197 | 0,205 | 0,205 |
| Sortie (MPa absolue) | 0,150 | 0,150 | 0,150 |
| **Temps de séjour (ms)** | 93 | 85 | 85 |
| **CARACTERISTIQUES DU NAPHTA** |  |  |  |
| Densité (15 °C) | 0,681 |  |  |
| **ASTM** |  |  |  |
| Point initial (°C) | 36 |  |  |
| Point final (°C) | 184 |  |  |
| **COMPOSITION (% poids)** |  |  |  |
| % N paraffines | 42,12 |  |  |
| % Isoparaffines | 37,66 |  |  |
| % Naphténiques | 14,44 |  |  |
| % Aromatiques | 5,38 |  |  |
| **RENDEMENTS (% pds)** |  |  |  |
| Fuel gas (CH4 + H2) | 14,2 | 13,5 | 13,5 |
| Coupe C2 | 33,3 | 38,8 | 38,8 |
| Coupe C3 | 17,6 | 16,5 | 16,5 |
| Coupe C4 | 13,9 | 11 | 11 |
| Essence (C5-C11) | 18 | 17 | 17 |
| Fuel oil résiduaire (C12+) | 3,0 | 3,2 | 3,2 |
| Température peau maxi (°C) | 1054 | 1198 | 1198 |
| Vitesse de cokage en ce point ($g \times h^{-1} \times m^{-2}$) | 63 | 16 | 18 |

## Revendications

1. Procédé de craquage thermique d'une charge contenant au moins un hydrocarbure à un atome de car-

9

bone au moins dans lequel on fait circuler cette charge,dans des conditions de craquage thermique, dans une zone réactionnelle métallique dont la paroi externe est en relation d'échange thermique avec un fluide de chauffage caractérisé en ce que ladite zone réactionnelle est constituée d'un alliage comprenant en poids :

| | | | | |
|---|---|---|---|---|
| - | 66 | à | 82 | % de nickel, |
| - | 14 | à | 18 | % de chrome, et |
| - | 4 | à | 6 | % d'aluminium. |

2. Procédé selon la revendication 1, dans lequel ledit alliage comprend en poids :

| | | | | | | | | |
|---|---|---|---|---|---|---|---|---|
| - | 66 | à | 81,999 | % et de préférence | 71 | à | 78,9 | % de nickel, |
| - | 14 | à | 18 | % et de préférence | 15 | à | 17 | % de chrome, |
| - | 4 | à | 6 | % et de préférence | 4,1 | à | 5,1 | % d'aluminium, et |
| - | 0,001 | à | 8 | % et de préférence | 1 | à | 6 | % de fer. |

3. Procédé selon l'une des revendications 1 à 2, dans lequel ledit alliage comprend, en outre :

| | | | | | |
|---|---|---|---|---|---|
| de | 0 | à | 0,25 | % | de carbone, |
| de | 0 | à | 0,03 | % | de bore, |
| de | 0 | à | 5 | % | de tungstène, |
| de | 0 | à | 2,5 | % | de tantale, |
| de | 0 | à | 5 | % | de titane, |
| de | 0 | à | 0,5 | % | de hafnium, |
| de | 0 | à | 0,25 | % | de zirconium, |
| de | 0 | à | 0,2 | % | de rhénium, |
| de | 0 | à | 12 | % | de cobalt, |
| de | 0 | à | 1 | % | de manganèse, |
| de | 0 | à | 3 | % | de molybdène, |
| de | 0 | à | 1 | % | de silicium, |
| de | 0 | à | 1,5 | % | d'yttrium, |
| de | 0 | à | 0,2 | % | de cadmium, |
| de | 0 | à | 0,05 | % | de soufre, et |
| de | 0 | à | 0,05 | % | de phosphore. |

4. Procédé selon l'une des revendications 1 à 3 dans lequel la température maximale de la paroi externe de la zone réactionnelle peut atteindre 1190 °C à 1250 °C.

5. Procédé selon l'une des revendications 1 à 4 dans lequel la zone réactionnelle de pyrolyse A est une zone comprenant une pluralité de canaux constituant un premier groupe de canaux D et un second groupe de canaux F, chaque canal D dudit premier groupe étant positionné de manière adjacente à au moins un canal F du second groupe, les canaux du premier groupe dans lequel on fait s'écouler le mélange s'étendant tout le long de la zone A et ayant une entrée 1 et une sortie 11 respectivement au début et à la fin de cette zone, le second groupe de canaux F définissant une zone de chauffage dans laquelle le mélange réactionnel circulant à travers les canaux du premier groupe est chauffé par échange de chaleur indirect avec un fluide de chauffage circulant dans le second groupe de canaux, les canaux du second groupe F ayant une entrée 2 située de préférence à une distance du début des canaux représentant 5 à 95 % de leur longueur totale et les canaux du second groupe F, ayant en outre, soit une sortie 3 au début de ces canaux, soit une sortie 4 à la fin de ceux-ci, soit une sortie 3 et une sortie 4 respectivement au début et à la fin de ceux-ci.

6. Procédé selon la revendication 5 caractérisé en ce que la zone réactionnelle comprend deux zones A et B en continuité où les canaux du second groupe sont divisés en une première section F et en une seconde section F', ces deux sections étant des sections successives non communiquantes séparées par une cloison intermédiaire J, la première section étant la zone de chauffage ou de pyrolyse A, la seconde section définissant une zone de trempe B contiguë à la zone A dans laquelle le mélange réactionnel craqué thermiquement qui circule dans les canaux du premier groupe est refroidi par échange indirect avec un fluide de refroidissement circulant à travers la seconde section F' des canaux du second groupe, la première section F ayant une entrée 2 et soit une première sortie 3 au début de ladite section soit une seconde sortie 4 à proximité de la cloison intermédiaire J soit à la fois la première et la seconde sorties 3 et 4, tandis que la seconde section F' a une entrée 6 à proximité de la cloison intermédiaire et une sortie 7 à la fin de la seconde section, le procédé étant, en outre, caractérisé en ce qu'on effectue une pyrolyse du mélange dans une partie des canaux D du premier groupe adjacente à la première section F des canaux du second groupe et on soumet de manière subséquente le mélange pyrolysé à des conditions de trempe indirecte dans une partie des canaux du premier groupe adjacente à la seconde section F' des canaux du second groupe.

7. Procédé selon l'une des revendications 1 à 6 dans lequel la zone réactionnelle comprend une paroi interne en contact avec ledit mélange et dans lequel on effectue une étape de préoxydation selon laquelle les parois internes et externes de la zone réactionnelle sont mises en contact, à une température de 1050 à 1250 °C pendant 1 à 120 minutes, avec un mélange de gaz comprenant de l'hydrogène et de l'oxygène, ledit mélange ayant un point de rosée inférieur à - 34 °C.

8. Procédé selon la revendication 7 dans lequel on revêt les parois de la zone réactionnelle d'au moins une couche formée par un oxyde d'au moins un métal et/ou au moins un carbure métallique et/ou au moins un nitrure métallique et/ou au moins un siliciure métallique.

9. Procédé selon la revendication 8 dans lequel la couche est formée d'au moins un oxyde d'un métal choisi dans le groupe formé par l'aluminium, le zirconium, l'yttrium, le cérium, le silicium et le titane et/ou d'au moins un carbure d'au moins un métal choisi dans le groupe formé par le silicium, le titane, le zirconium et le bore et/ou d'au moins un nitrure d'au moins un métal choisi dans le groupe formé par le bore, le titane et le zirconium et/ou d'au moins un siliciure d'au moins un métal choisi dans le groupe formé par le titane, le zirconium et le niobium.

10. Procédé selon la revendication 8 ou 9 dans lequel la couche de revêtement a une épaisseur d'environ $2 \times 10^{-6}$ à environ $10^{-3}$ mètre.

11. Procédé selon l'une des revendications 8 à 10 dans lequel la couche de revêtement est déposée par imprégnation ou par dépôt chimique en phase vapeur, assisté ou non par plasma ou par pulvérisation, assistée ou non par plasma.

12. Procédé selon l'une des revendications 1 à 11 dans lequel la couche de revêtement comporte un catalyseur.

13. Réacteur pour la mise en oeuvre du procédé selon l'une des revendications 1 à 7, caractérisé en ce qu'il est constitué essentiellement d'un alliage de composition suivante :

- 66 à 82 % de nickel.

- 14 à 18 % de chrome, et

- 4 à 6 % d'aluminium.

14. Réacteur pour la mise en oeuvre du procédé selon l'une des revendications 7 à 12 caractérisé en ce que l'alliage qui le constitue est, au moins dans la zone réactionnelle, revêtu d'au moins une couche formée par un un oxyde d'au moins un métal et/ou au moins un carbure métallique et/ou au moins un nitrure métallique et/ou au moins un siliciure métallique.

15. Réacteur selon la revendication 13 ou 14 caractérisé en ce qu'il consiste en un réacteur de vapocraquage.

16. Réacteur selon la revendication 13 ou 14 caractérisé en ce qu'il consiste en un réacteur de déshydrogénation thermique.

**Patentansprüche**

1. Thermisches Crackverfahren eines Einsatzstoffes, der mindestens einen Kohlenwasserstoff mit mindestens einem Kohlenstoffatom enthält, bei dem man diesen Einsatzstoff unter den Bedingungen des thermischen Crackens in einer metallischen Reaktionszone zirkulieren läßt, deren äußere Wand zum Wärmeaustausch mit einem Heizmedium in Verbindung steht, dadurch gekennzeichnet, daß diese Reaktionszone aus einer Legierung besteht, die bezogen auf Gewicht, aus

- 66 bis 82 % Nickel,
- 14 bis 18 % Chrom,
- 4 bis 6 % Aluminium

zusammengesetzt ist.

2. Verfahren nach Anspruch 1, bei dem diese Legierung, bezogen auf Gewicht, das folgende umfaßt:

- 66 bis 81,999 % und vorzugsweise 71 bis 78,9 % Nickel,
- 14 bis 18 % und vorzugsweise 15 bis 17 % Chrom,
- 4 bis 6 % und vorzugsweise 4,1 bis 5,1 % Aluminium und
- 0,001 bis 8 % und vorzugsweise 1 bis 6 % Eisen.

3. Verfahren nach einem der Ansprüche 1 bis 2, bei dem die besagte Legierung darüber hinaus noch folgendes beinhaltet:

- von 0 bis 0,25 % Kohlenstoff
- von 0 bis 0,03 % Bor
- von 0 bis 5 % Wolfram
- von 0 bis 2,5 % Tantal
- von 0 bis 5 % Titan
- von 0 bis 0,5 % Hafnium
- von 0 bis 0,25 % Zirkonium
- von 0 bis 0,2 % Rhenium
- von 0 bis 12 % Cobalt
- von 0 bis 1 % Mangan
- von 0 bis 3 % Molybdän

| | von | 0 | bis | 1 | % Silicium |
|---|---|---|---|---|---|
| – | von | 0 | bis | 1,5 | % Yttrium |
| – | von | 0 | bis | 0,2 | % Cadmium |
| – | von | 0 | bis | 0,05 | % Schwefel und |
| – | von | 0 | bis | 0,05 | % Phosphor |

4. Verfahren nach einem der Ansprüche 1 bis 3, bei dem die maximale Temperatur der Außenwand der Reaktionszone 1190 °C bis 1250 °C erreichen kann.

5. Verfahren nach einem der Ansprüche 1 bis 4, bei dem die Reaktionszone der Pyrolyse A eine Zone ist, die eine Vielzahl von Kanälen umfaßt, die eine erste Gruppe von Kanälen D und eine zweite Gruppe von Kanälen F bilden, wobei jeder Kanal D der besagten ersten Gruppe mindestens einem Kanal F der zweiten Gruppe benachbart angeordnet ist, die Kanäle der ersten Gruppe, in denen das Gemisch fließt, erstrecken sich entlang der ganzen Zone A und besitzen einen Eingang 1 und einen Ausgang 11, an Eingang und am Ausgang dieser Zone, respektive, die zweite Gruppe von Kanälen F, die eine Heizzone bestimmt, in der das Reaktionsgemisch, das durch die Kanäle der ersten Gruppe fließt, durch Wärmeaustausch indirekt mit einem Heizmedium geheizt wird, das in der zweiten Gruppe von Kanälen fließt, wobei die Kanäle der zweiten Gruppe F einen Eingang 2 besitzen, der vorzugsweise in einem Abstand vom Anfang der Kanäle liegt, der 5 bis 95 % ihrer gesamten Länge entspricht und die Kanäle der zweiten Gruppe F darüber hinaus entweder einen Ausgang 3 am Anfang dieser Kanäle oder einen Ausgang 4 an ihrem Ende besitzen, oder einen Ausgang 3 und einen Ausgang 4, respektive, an ihrem Anfang und an ihrem Ende.

6. Verfahren nach Anspruch 5, dadurch gekennzeichnet, daß die Reaktionszone zwei aufeinanderfolgende Zonen A und B umfaßt, wo die Kanäle der ersten Gruppe in einen ersten Abschnitt F und einen zweiten Abschnitt F' unterteilt sind, diese beiden Teile folgen aufeinander und sind nicht kommunizierend durch eine dazwischenliegende Trennwand J getrennt, der erste Abschnitt ist dabei die Heiz- oder Pyrolysezone A, der zweite Abschnitt definiert eine Abschreckzone B, die an die Zone A angrenzt, in der das thermisch gecrackte Reaktionsgemisch, das in den Kanälen der ersten Gruppe zirkuliert, durch indirekten Wärmeaustausch mit einem Kühlmedium abgekühlt wird, das durch den zweiten Abschnitt F' der Kanäle der zweiten Gruppe zirkuliert, der erste Abschnitt F hat einen Eingang 2 und entweder einen ersten Ausgang 3 am Anfang des besagten Abschnittes oder einen zweiten Ausgang 4 in der Nähe der dazwischenliegenden Trennwand J oder zugleich den ersten und den zweiten Ausgang 3 und 4, während der zweite Abschnitt F' einen Eingang 6 in der Nähe der Zwischentrennwand und einen Ausgang 7 am Ende des zweiten Abschnittes besitzt, das Verfahren wird darüber hinaus dadurch gekennzeichnet, daß eine Pyrolyse der Gemisches in einem Teil der Kanäle D der ersten Gruppe durchgeführt wird, die zum ersten Abschnitt F der Kanäle der zweiten Gruppe benachbart sind, und das Pyrolysegemisch anschließend in einem Teil der Kanäle der ersten Gruppe, die dem zweiten Abschnitt F' der Kanäle der zweiten Gruppe benachbart sind, den Bedingungen des indirekten Abschreckens unterworfen werden.

7. Verfahren gemäß einem der Ansprüche 1 bis 6, bei dem die Reaktionszone eine innere Wand umfaßt, die in Kontakt zu dem besagten Gemisch ist und an der ein Schritt der Voroxidierung ausgeführt wird, in dessen Verlauf die inneren und äußeren Wände der Reaktionszone bei einer Temperatur von 1050 bis 1250 °C eine Stunde bis 120 Minuten lang mit einem Gasgemisch in Kontakt gebracht werden, das Wasserstoff und Sauerstoff enthält und dessen Taupunkt unterhalb von - 34 °C liegt.

8. Verfahren nach Anspruch 7, bei dem die Wände der Reaktionszone mit mindestens einer Schicht ausgekleidet werden, die aus einem Oxid von mindestens einem Metall und/oder mindestens einem Metallcarbid und/oder mindestens einem Metallnitrid und/oder mindestens einem Metallsilicid gebildet wird.

9. Verfahren nach Anspruch 8, bei dem die Schicht von mindestens einem Metalloxid gebildet wird, das aus der von Aluminium, Zirkonium, Yttrium, Cer und Titan gebildeten Gruppe gewählt wird und/oder von mindestens einem Carbid von mindestens einem Metall, das aus der von Silicium, Titan, Zirkonium und Bor gebildeten Gruppe gewählt wird, und/oder von mindestens einem Nitrid von mindestens einem Metall, das aus der von Bor, Titan und Zirkonium gebildeten Gruppe gewählt wird, und/oder von mindestens einem Silicid von mindestens einem Metall, das aus der von Titan, Zirkonium und Niob gebildeten Gruppe gewählt wird.

**10.** Verfahren nach Anspruch 8 oder 9, bei dem die Auskleidungsschicht eine Dicke von ungefähr 2 x $10^{-6}$ bis ungefähr $10^{-3}$ Meter besitzt.

**11.** Verfahren nach Anspruch 8 bis 10, bei dem die Auskleidungsschicht durch Imprägnierung oder durch chemische Auftragung aus der Dampfphase, entweder mit oder ohne Hilfe von Plasma oder durch Zerstäubung, mit oder ohne Hilfe von Plasma, aufgetragen wird.

**12.** Verfahren nach einem der Ansprüche 1 bis 11, bei dem die Auskleidungsschicht einem Katalysator umfaßt.

**13.** Reaktor zur Durchführung des Verfahrens nach einem der Ansprüche 1 bis 7, dadurch gekennzeichnet, daß er hauptsächlich aus einer Legierung mit der folgenden Zusammensetzung besteht:

- 66 bis 82 % Nickel,
- 14 bis 18 % Chrom,
- 4 bis 6 % Aluminium

**14.** Reaktor zur Durchführung des Verfahrens nach einem der Ansprüche 7 bis 12, dadurch gekennzeichnet, daß die Legierung, die ihn bildet zumindest in der Reaktionszone mit mindestens einer Schicht ausgekleidet ist, die von einem Oxid von mindestens einem Metall und/oder von mindestens einem Metallcarbid und/oder von mindestens einem Metallnitrid und/oder von mindestens einem Metallsilicid gebildet wird.

**15.** Reaktor nach Anspruch 13 oder 14, dadurch gekennzeichnet, daß er aus einem Reaktor zum Steamcracken besteht.

**16.** Reaktor nach Anspruch 13 oder 14, dadurch gekennzeichnet, daß er aus einem Reaktor zur thermischen Dehydrierung besteht.

## Claims

**1.** Process for the thermal cracking of a charge containing at least one hydrocarbon having at least one carbon atom, in which, under thermal cracking conditions, said charge is made to flow in a metallic reaction zone, whose outer wall is in heat exchange relationship with a heating fluid, characterized in that the reaction zone is made from an alloy comprising by weight 66 to 82% nickel, 14 to 18% chromium and 4 to 6% aluminium.

**2.** Process according to claim 1, wherein the alloy comprises by weight 66 to 81.999% and preferably 71 to 78.9% nickel, 14 to 18 and preferably 15 to 17% chromium, 4 to 6 and preferably 4.1 to 5.1% aluminium and 0.001 to 8 and preferably 1 to 6% iron.

**3.** Process according to either of the claims 1 and 2, wherein the alloy also comprises 0 to 0.25% carbon, 0 to 0.03% boron, 0 to 5% tungsten, 0 to 2.5% tantalum, 0 to 5% titanium, 0 to 0.5% hafnium, 0 to 0.25% zirconium, 0 to 0.2% rhenium, 0 to 12% cobalt, 0 to 1% manganese, 0 to 3% molybdenum, 0 to 1% silicon, 0 to 1.5% yttrium, 0 to 0.2% cadmium, 0 to 0.05% sulphur and 0 to 0.05% phosphorus.

**4.** Process according to any one of the claims 1 to 3, wherein the maximum temperature of the outer wall of the reaction zone can reach 1190 to 1250°C.

**5.** Process according to any one of the claims 1 to 4, wherein the pyrolysis reaction zone A is a zone incorporating a plurality of channels constituting a first group of channels D and a second group of channels F, each channel D of the first group being positioned adjacent to at least one channel F of the second group, the channels of the first group in which the mixture is mode to flow extending along the entire zone A and having an inlet 1 and an outlet 11 respectively at the start and finish of said zone, the second group of channels F defining a heating zone in which the reaction mixture flawing through the channels of the first group is heated by indirect heat exchange with a heating fluid flowing in the second group of channels, the channels of the second group F having on inlet 2 preferably located at a distance from the start of said channels representing 5 to 95% of their total length and the channels of the second group F also having either an outlet 3 at the start of said channels, or an outlet 4 at the end thereof, or an outlet 3 and an outlet 4 respectively at the start and finish thereof.

6. Process according to claim 5, characterized in that the reaction zone comprises two continuous zones A and B, where the channels of the second group are subdivided into a first section F and a second section F', said two sections being successive, non-communicating sections separated by an intermediate partition J, the first section being the heating or pyrolysis zone A, the second section defining a quenching zone B contiguous to the zone A, in which the thermally cracked reaction mixture circulating in the channels of the first group is cooled by indirect exchange with a cooling fluid circulating through the second section F' of the channels of the second group, the first section F having an inlet 2 and either a first outlet 3 at the start of said section, or a second outlet 4 in the vicinity of the intermediate partition J, or both the first and second outlets 3 and 4, whilst the second section F' has an inlet 6 in the vicinity of the intermediate partition and an outlet 7 at the end of the second section, the process also being characterized in that the mixture is pyrolyzed in part of the channels D of the first group adjacent to the first section F of the channels of the second group and subsequently the pyrolyzed mixture is subject to indirect quenching conditions in a part of the channels of the first group adjacent to the second section F' of the channels of the second group.

7. Process according to any one of the claims 1 to 6, wherein the reaction zone comprises an inner wall in contact with the said mixture and wherein a preoxidation stage is carried out, in which the inner and outer walls of the reaction zone are contacted, at a temperature between 1050 and 1250°C for 1 to 120 minutes, with a gaseous mixture incorporating hydrogen and oxygen, said mixture having a dew point below -34°C.

8. Process according to claim 7, wherein the walls of the reaction zone are coated with at least one coating formed by an oxide of at least one metal and/or at least one metal carbide and/or at least one metal nitride and/or at least one metal silicide.

9. Process according to claim 8, wherein the coating is formed from at least one oxide of a metal chosen from within the group formed by aluminium, zirconium, yttrium, cerium, silicon and titanium and/or at least one carbide of at least one metal chosen from within the group formed by silicon, titanium, zirconium and boron and/or at least one nitride of at least one metal chosen from within the group formed by boron, titanium and zirconium and/or at least one silicide of at least one metal chosen from the group formed by titanium, zirconium and niobium.

10. Process according to claims 8 or 9, wherein the coating has a thickness of approximately $2 \times 10^{-6}$ to approximately $10^{-3}$ metre.

11. Process according to any one of claims 8 to 10, wherein the coating is deposited by impregnation or plasma-assisted or plasma-non-assisted chemical vapour deposition, or by plasma-assisted or plasma-non-assisted spraying.

12. Process according to any one of the claims 1 to 11, wherein the coating incorporates a catalyst.

13. Reactor for performing the process according to any one of the claims 1 to 7, characterized in that it is essentially made from an alloy constituted by 66 to 82% nickel, 14 to 18% chromium and 4 to 6% aluminium.

14. Reactor for performing the process according to any one of the claims 7 to 12, characterized in that the alloy forming it is, at least in the reaction zone, coated with at least one coating formed by an oxide of at least one metal and/or at least one metal carbide and/or at least one metal nitride and/or at least one metal silicide.

15. Reactor according to claims 13 or 14, characterized in that it is a steam cracking reactor.

16. Reactor according to claims 13 or 14, characterized in that it is a thermal dehydrogenation reactor.